(19) Europäisches Patentamt
European Patent Office
Office européen des brevets

(11) EP 2 535 371 A1

(12) EUROPEAN PATENT APPLICATION
published in accordance with Art. 153(4) EPC

(43) Date of publication:
**19.12.2012 Bulletin 2012/51**

(21) Application number: **11739825.5**

(22) Date of filing: **03.02.2011**

(51) Int Cl.:
***C08L 21/00*** *(2006.01)* ***C08K 5/3492*** *(2006.01)*
***C08L 23/08*** *(2006.01)*

(86) International application number:
**PCT/JP2011/052247**

(87) International publication number:
**WO 2011/096477 (11.08.2011 Gazette 2011/32)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **08.02.2010 JP 2010025808**

(71) Applicant: **Nippon Kasei Chemical Co., Ltd.**
**Iwaki-shi, Fukushima 971-8101 (JP)**

(72) Inventors:
- **YAMAURA, Mabuko**
**Iwaki-shi**
**Fukushima 971-8101 (JP)**
- **ORIKASA, Yukio**
**Iwaki-shi**
**Fukushima 971-8101 (JP)**
- **SENZAKI, Kazuya**
**Iwaki-shi**
**Fukushima 971-8101 (JP)**
- **KAGAWA, Takashi**
**Iwaki-shi**
**Fukushima 971-8101 (JP)**

(74) Representative: **HOFFMANN EITLE**
**Patent- und Rechtsanwälte**
**Arabellastrasse 4**
**81925 München (DE)**

(54) **CROSS-LINKING AGENT FOR CROSS-LINKABLE ELASTOMERS AND APPLICATION THEREOF**

(57) The object of the present invention is to provide a cross-linking agent for a cross-linkable elastomer which is excellent in the heat resistance and rapid in the cross-linking rate in comparison with triallyl isocyanurate (TAIC).

The present invention relates to a cross-linking agent for a cross-linkable elastomer comprising a triazine derivative represented by the general formula (I) or prepolymer thereof.

[Chemical Formula 1]

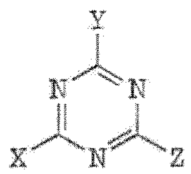

(I)

(In the formula (I), at least two of X, Y and Z are each independently a diallylamino group, a mono-allyl amino group or allyl-methylamino group, and the rest is a hydrogen atom or a hydrocarbon group which may be substituted.)

EP 2 535 371 A1

## Description

### TECHNICAL FIELD

The present invention relates to a cross-linking agent for a cross-linkable elastomer and application thereof. More specifically, the present invention relates to a cross-linking agent for a cross-linkable elastomer comprising a melamine derivative having a specific structure or prepolymer thereof, and application thereof. In the present invention, the term of cross-linkable elastomer means an elastomer having an active site which can be cross-linked by radical generation.

### BACKGROUND ART

Isocyanurate derivatives, especially triallyl isocyanurate (hereinafter referred as TAIC) is known as a cross-linking agent useful in obtaining a molded product by curing the cross-linkable elastomer.

However, although the cross-linkable elastomer molded product using TAIC is excellent in the chemical resistance and compression permanent strain, the heat resistance is insufficient. Also, if TAIC is used for a substituted polyolefin, especially an ethylene-vinyl acetate copolymer, there is a disadvantage that the time of cross-linking process becomes longer because of slow cross-linking rate.

On the other hand, a triazine derivative having a specific structure has been proposed as a cross-linking agent having excellent heat resistance compared to TAIC (Patent Document 1).

However, in the above proposal, there is no mention for the cross-linkable elastomer.

### Prior Documents

### Patent Documents

Patent Document 1: USP 3,227,065

### SUMMARY OF THE INVENTION

### PROBLEMS TO BE SOLVED BY THE INVENTION

The present invention has been made in view of the above circumstances. The object of the present invention is to provide a cross-linking agent for a cross-linkable elastomer which is excellent in the heat resistance and rapid in the cross-linking rate in comparison with TAIC.

### MEANS FOR SOLVING THE PROBLEMS

As a result of the present inventors' earnest study, it has been found that the present invention can be achieved easily by the above triazine derivative or prepolymer thereof.

Thus, in a first aspect of the present invention, there is provided a cross-linking agent for a cross-linkable elastomer comprising a triazine derivative represented by the general formula (I) or prepolymer thereof.

[Chemical Formula 1]

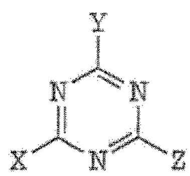

(I)

(In the formula (I), at least two of X, Y and Z are each independently a diallylamino group, a mono-allyl amino group or allyl-methylamino group, and the rest is a hydrogen atom or a hydrocarbon group which may be substituted.)

In a second aspect of the present invention, there is provided a cross-linkable elastomer composition comprising

a cross-linkable elastomer and the triazine derivative represented by the general formula (I) or prepolymer thereof, the blending amount of triazine derivative or prepolymer thereof being 0.05 to 15 parts by weight based on 100 parts by weight of the cross-linkable elastomer.

In a third aspect of the present invention, there is provided a process for producing an elastomer molded product by curing a cross-linkable elastomer, comprising using the triazine derivative represented by the general formula (I) or prepolymer thereof as a cross-linking agent.

In a fourth aspect of the present invention, there is provided an elastomer molded product cured by the action of cross-linking agent, produced by using the triazine derivative represented by the general formula (I) or prepolymer thereof as a cross-linking agent.

## EFFECT OF THE INVENTION

According to the present invention, there is provided a cross-linking agent for a cross-linkable elastomer which is excellent in the heat resistance and rapid in the cross-linking rate in comparison with TAIC.

## BEST MODE FOR CARRYING OUT THE INVENTION

The present invention will be described in detail below.

<Cross-linking agents for cross-linkable elastomer>

The cross-linking agents for cross-linkable elastomer according to the present invention comprises a triazine derivative or prepolymer thereof represented by the above general formula (I).

As the hydrocarbon group which may be substituted in the above general formula (I), there are exemplified an aliphatic hydrocarbon group, an aromatic hydrocarbon group and the alicyclic hydrocarbon group which have 1 to 10 carbon atoms. Aliphatic hydrocarbon group also may have a branched structure which may have a substituent. As specific examples of the hydrocarbon group, there are exemplified an alkyl group, alkenyl group, an alkoxy group, a thioalkyl group, an alkoxycarbonyl group, a cyclohexyl group, phenyl group, benzyl group or the like. In addition, X, Y and Z in the formula (I) may be the same or different each other.

Specific examples of the triazine derivative represented by the general formula (I) include tris(diallylamino)-S-triazine, tris(allylamino)-S-triazine, tris(allyl-methylamino)-S-triazine, 4,6-bis(diallylamino)-2-allylamino-1,3,5-triazine, 4,6-bis(diallylamino)-2-(allyl-methylamino)-1,3,5-triazine, 4,6-bis(allylamino)-2-diallylamino-1,3,5-triazine, 4,6-bis(allylamino)-2-(allyl-methylamino)-1,3,5-triazine, 4,6-bis(allyl-methylamino)-2-diallylamino-1,3,5-triazine, 4,6-bis(allyl-methylamino)-2-allylamino-1,3,5-triazine, 4,6-bis(diallylamino)-2-phenyl-1,3,5-triazine, 4,6-bis(diallylamino)-2-cyclohexyl-1,3,5-triazine, 4,6-bis(diallylamino)-2-methoxy-1,3,5-triazine, 4,6-bis(allylamino)-2-phenyl-l,3,5-triazine, 4,6-bis (allylamino)-2-cyclohexyl-1,3,5-triazine, 4,6-bis(allylamino)-2-methoxy-1,3,5-triazine, 4,6-bis(allyl-methylamino)-2-phenyl-1,3,5-triazine, 4,6-bis(allyl-methylamino)-2-cyclohexyl-1,3,5-triazine, 4,6-bis(allyl-methylamino)-2-methoxy-1,3,5-triazine or the like.

The triazine derivative and prepolymer thereof represented by general formula (I) have been already known, the monomer of triazine derivative can be easily obtained by for example, a method of reacting diallylamine, monoallylamine or the like with cyanuric chloride in the presence of a base. As the base, there are exemplified an alkali metal carbonate such as potassium carbonate and sodium carbonate, an alkali metal hydroxide such as sodium hydroxide and potassium hydroxide, or the like. As the base, a tertiary amine such as triethylamine, the amine as the reaction component or the like may be used. As the reaction solvent, tetrahydrofuran (THF), dioxane, toluene, N,N-dimethylformamide, N,N-dimethylacetamide or the like are used. The reaction temperature may vary depending on the kind of reaction components, and is generally about 20 to 200°C. The above triazine derivative and prepolymer thereof can be obtained by radical-polymerizing the monomer with an organic peroxide or the like as an initiator. The number-average molecular weight thereof is usually 1000 to 20000, preferably 2000 to 7000.

The above triazine derivative and prepolymer thereof is used as the cross-linking agent for the cross-linkable elastomer according to the present invention and the types and usage of cross-linkable elastomer will be described in the later description for the other invention.

<Cross-linkable elastomer composition>

The cross-linkable elastomer composition according to the present invention is prepared by blending at least the triazine derivative or prepolymer thereof represented by the above general formula (I) into the cross-linkable elastomer. The blending amount of triazine derivative or prepolymer thereof is 0.05 to 15 parts by weight based on 100 parts by weight of cross-linkable elastomer.

The kind of cross-linkable elastomer is not particularly limited, for example, natural rubber, isoprene rubber, butadiene rubber, ethylene propylene rubber, styrene rubber, nitrile rubber, hydrogenated nitrile rubber, chloroprene rubber, chlorosulfonated polyethylene, acrylic rubber, ethylene acrylic rubber, silicone rubber, fluorine rubber, hydrin rubber or the like may be mentioned. In addition, there are exemplified substituted olefins which is a copolymer of olefin such as ethylene and propylene with vinyl alcohol, acrylic acid, methacrylic acid, ethyl acrylate, glycidyl methacrylate, vinyl acetate or the like. Further, a blended rubber comprising two or more components mentioned above may be also used. Of these, the substituted polyolefin is preferred. The type of substituted polyolefin is not particularly limited, and preferred thereof is ethylene-vinyl acetate copolymer. The vinyl acetate content in the ethylene-vinyl acetate copolymer is usually 10 to 40% by weight, preferably 20 to 35% by weight.

The blending ratio of triazine derivative or prepolymer thereof to the cross-linkable elastomer is preferably 0.05 to 15% by weight.

In the present invention, the other cross-linking agent may be used in combination with the above-mentioned cross-linking agent. The other cross-linking agents include, but are not particularly limited, an isocyanurate derivative represented by the following general formula (II) is preferred.

[Chemical formula 2]

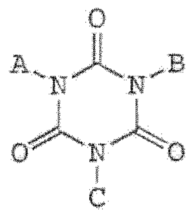

(II)

(In the formula (II), at least two of A, B, and C each independently represent an allyl group which may be substituted, and the rest represents a hydrogen atom or a hydrocarbon group which may be substituted.)

The above hydrocarbon group is synonymous with those described by the above general formula (I). In addition, A B and C in the formula (II) may be the same or different from each other.

The isocyanurate derivative represented by the general formula (II) has been already known. As specific examples thereof, there are exemplified triallyl isocyanurate (TAIC), diallylmethallyl isocyanurate, diallylbenzyl isocyanurate, diallyl-4-trifluoromethylbenzyl isocyanurate, tri-methallyl isocyanurate, diallylmethyl isocyanate, ethoxycarbonyl methyldiallyl isocyanate or the like.

When using the triazine derivative or prepolymer thereof and the above isocyanurate derivative in combination, the total amount thereof is usually 0.05 to 15 parts by weight, preferably from 0.5 to 5 parts by weight based on 100 parts by weight of the cross-linkable elastomer. The percentage of isocyanurate derivative to the total of all cross-linking agent is usually 5 to 95% by weight.

Further, in addition to the above isocyanurate derivative, polyfunctional (meth)acrylate may be used in combination. The polyfunctional (meth)acrylate has two or more, preferably three or more (meth)acryloyl groups in one molecule. More specifically, there are exemplified trimethylolpropane tri(meth)acrylate, pentaerythritol tri(meth)acrylate, tris((meth) acryloxyethyl) isocyanurate, dimethylolpropane tetra(meth)acrylate, tetraethylene glycol di(meth)acrylate, nonaethylene glycol di(meth)acrylate or the like. The amount of these polyfunctional (meth)acrylate added is 0.05 to 15 parts by weight based on 100 parts by weight of cross-linkable elastomer.

To the cross-linkable elastomer composition, an organic peroxide may be blended. The organic peroxide is usually an essential component for the heat cross-linking, and is not particularly limited as long as it is a known organic peroxide to generate peroxy radicals under the vulcanization conditions. There are exemplified di-t-butylperoxide, dicumylperoxide, 2,5-dimethyl-2,5-di(benzoylperoxy) hexane, 2,5-dimethyl-2,5-di(t-butylperoxy) hexane, t-butylperoxy-2-ethylhexyl-monocarbonate, 1,1-bis(t-butylperoxy)-3,5,5-trimethyl cyclohexane, 2,5-dimethyl-2,5-dihydroxyperoxide, t-butylcumylperoxide, $\alpha$, $\alpha$'-bis(t-butylperoxy)-p-diisopropyl benzene, 2,5-dimethyl-2,5-di(t-butylperoxy) hexyne, benzoylperoxide, t-butylperoxy benzene or the like.

The blending amount of the organic peroxide, may vary depending on the type of used cross-linkable elastomer, and is usually 0.1 to 10% by weight, preferably 0.5 to 5% by weight based on 100 parts by weight of the cross-linkable elastomer. In case of radiation cross-linking, the organic peroxide is not necessarily required.

In the present invention, known additives such as a polymerization inhibitor, filler, pigment, stabilizer, lubricant, releasing agent, plasticizer, anti-aging agent, silane coupling agent, ultraviolet absorber, flame retardant and acid acceptor can be used.

As the anti-aging agent, there are exemplified di-t-butyl-P-cresol, pentaerythrityl-tetraxy[3-(3,5-di-t-butyl-4-hydroxyphenyl)propionate], 2,2'-methylenebis(2-methyl-6-t-butylphenyl), bis(2,2,6,6-tetramethyl-4-piperadyl)sebacate, N, N'-hexane-1,6-diylbis[3-(3,5-di-tert-butyl-4-hydroxyphenyl)propionamido], bis(2,2,6,6-tetramethyl-4-piperadyl)sebacate, hydroquinone monomethylether, methylhydroquinone or the like.

As the silane coupling agent, there are exemplified γ-chloropropyl trimethoxysilane, vinyl triethoxysilane, vinyltris-(β-methoxyethoxy) silane, γ-methacryloxypropyl trimethoxysilane, β-(3,4-ethoxy-cyclohexyl)ethyl trimethoxysilane, γ-glycidoxypropyl trimethoxysilane, γ-mercaptopropyltrimethoxysilane, γ-aminopropyl trimethoxysilane, N-β-(aminoethyl)-y-aminopropyl trimethoxysilane or the like.

As the ultraviolet absorber, there are exemplified 2-hydroxy-4-n-octyloxy benzophenone, 2,2-hydroxy-4,4-dimethoxy benzophenone, 2-(2'-hydroxy-5-methylphenyl) benzotriazole, p-t-butylphenyl salicylate or the like.

The blending amount of the above additive is usually not more than 10 parts by weight, preferably 5 parts by weight based on 100 parts by weight of the cross-linkable polymer.

Each of the above ingredients are mixed by a usual kneader such as a Banbury mixer, a kneader, an open roll or the like to form a cross-linkable elastomer composition.

<Process for producing an elastomer molded product>

The process according to the present invention is a process for producing an elastomer molded product by curing the cross-linkable elastomer. Then, as the cross-linking agent, the triazine derivative or prepolymer thereof represented by the above general formula (I) is used. As the cross-linking, either heating cross-linking and radiation cross-linking may be used, heating cross-linking is preferred.

The heating cross-linking is conducted by such a manner that, after filling a prescribed amount of cross-linkable elastomer composition is filled in a mold having a desired shape, and subjected to primary cross-linking by a heating process, if necessary, secondary cross-linking is applied in the oven. The shape of mold in the molding machine can be optionally selected from, for example, a sheet-shape, rod-shape, ring-shape and various complex block-shapes depending on the application of obtained elastomer molded product.

The primary cross-linking is conducted by heating thereof at usually 120 to 200°C for 2 to 30 minutes by use of, for example, an injection molding machine, pressurizing molding machine or the like.

The secondary cross-linking is conducted at 120 to 200°C for 1 to 10 hours.

In addition, as the radiation used in the radiation cross-linking, there ca be used an electron beam acceleration, X-ray, α-ray, β-ray, γ-ray or the like. The irradiation dose may vary depending on the used cross-linkable elastomer type is usually 0.1 to 500 kGy.

<Elastomer molded product>

The elastomer molded product according to the present invention is an elastomer molded product cured by the action of cross-linking agent. As the cross-linking agent, the triazine derivative or prepolymer thereof represented by the above general formula (I) is used. The process for producing thereof is as described above.

<u>EXAMPLES</u>

The present invention is described in more detail below by the following Examples. However, these Examples are only illustrative and not intended to limit the present invention thereto unless they depart from the scope of the present invention. Evaluation methods used in the following Examples are shown as follows.

Synthesis Example 1 [Synthesis of tris(diallylamino)-S-triazine]

After 33.9g (0.32 mol) of sodium carbonate and 20.0g (0.10 mol) of cyanuric chloride were added into 140g of 1,4-dioxane and dissolved, 51.1g (0.52 mol) of diallylamine was gradually added thereinto and further, 15.2g (0.35 mol) of caustic soda was added thereinto. By generating the heat of reaction, the temperature of reaction solution was raised to about 90°C and the reaction was conducted at the temperature for 5 hours. Thereafter, the reaction mixture was cooled and filtered to remove the sodium chloride generated as the byproduct. The obtained filtrate was distilled under reduced pressure to recover the solvent. The obtained residue was diluted with ethyl acetate, washed with 5% by weight of aqueous hydrochloric acid solution, washed with water and thereafter, dried by anhydrous magnesium sulfate and filtered. The obtained filtrate is distilled under reduced pressure to recover the ethyl acetate contained therein. Further, the residue was distilled (distillation temperature: 155°C, degree of vacuum: 4 Torr) to obtain 35.2g of liquid tris (diallylamino)-S-triazine (LC purity: 99%, yield: 93%)

The above "LC purity" was determined as an area percentage by conducting liquid chromatography measurement where an "INERTSIL ODS-3" column (25cm) was set to "LC-10ADVP" manufactured by Shimadzu Corporation and a mixed solvent of acetonitrile and water was used.

Examples 1 to 2 and Comparative Example 1:

By using an open roll, respective components shown in Table 1 were kneaded with ethylene-vinyl acetate copolymer (EVA) in amounts of respective components shown in Table 1. The obtained composition was subject to heat-press cross-linking (primary cross-linking) at 150°C to obtain a sheet having 1 mm thickness.

<Measurement of the cross-linking rate>

When kneading above, by using a Curelastometer, the torque of composition (150°C) was read the value over 15 minutes to measure the cross-linking rate of the composition shown in Table 1. The intermediate value of maximum torque value and minimum torque value was "torque when cross-linking rate is 50%" and the time requiring therefor is "time when the cross-linking percentage is reached to 50%". Then, the value of 30% of the difference between the maximum torque value and minimum torque value was "torque when cross-linking rate is 30%" and the time requiring therefor is "time when the cross-linking percentage is reached to 30%". The evaluation results are shown in Table 2.

[Table 1]

| Compounding (parts by weight) | Example 1 | Example 2 | Comp. Example 1 |
|---|---|---|---|
| EVA(1) | 100 | 100 | 100 |
| Organic peroxide(2) | 1.3 | 1.3 | 1.3 |
| Cross-linking agent-1(3) | 2.0 | 0.2 | - |
| Cross-linking agent-2(4) | - | 1.8 | 2.0 |
| Silane coupling agent(5) | 0.5 | 0.5 | 0.5 |
| Ultra violet absorber(6) | 0.2 | 0.2 | 0.2 |
| (1) Vinyl acetate content: 26% by weight<br>(2) 2,5-dimethyl-2,5-(t-butylperoxy)hexane (manufactured by NOF Corporation<br>(3) Tris(diallylamino)-S-triazine<br>(4) Triallyl isocyanurate (manufactured by Nippon Kasei Chemical Co., Ltd.)<br>(5) γ-methacryloxy propyltrimethoxy silane<br>(6) 2-hydroxy-4-n-benzophenone octoxyphenyl | | | |

[Table 2]

| Evaluation results | Example 1 | Example 2 | Comp. Example 1 |
|---|---|---|---|
| Torque when cross-linking rate is 50% (dNm) | 3.0 | 3.0 | 3.0 |
| Time when the cross-linking percentage is reached to 50 (min) | 7.1 | 7.4 | 7.7 |
| Torque when cross-linking rate is 30% (dNm) | 1.9 | 1.9 | 1.9 |
| Time when the cross-linking percentage is reached to 30% (min) | 5.9 | 6.5 | 6.7 |

<Measurement of heat-resistant durability>

The composition shown in Table 1 was kneaded and heat-pressed at 150°C for 20 minutes to obtain a sheet-like molded product of ethylene-vinyl acetate copolymer. Then, a strip sheet of ethylene vinyl acetate copolymer (33 mm width and 110 mm length) was cut out from the molded product and used as a test piece for the heat-resistance durability. The obtained test piece was kept in a gear oven at 90°C for 500 hours, 700 hours and 900 hours. To the test pieces after respective keeping times, the following physical properties of (1) to (3) were evaluated. The evaluation results are shown in Tables 3 to 5.

(1) 100% modulus:

The test piece was molded to a dumbbell-shaped test piece (tensile form No. 3, JIS K 6251) to prepare a tensile test specimen. Then, the tensile stress test of test specimen was conducted by using an Autograph (AGS-10kNG type, manufactured by Shimadzu Corporation) and the tensile strength (MPa) when the elongation between the marked lines became a 100% increase at the start of the test was measured and was referred as 100% modulus. The measurement was conducted with a tensile speed of 200 mm/min.

(2) Degree of swelling:

A small strip (10 mm width and 20 mm length) was cut out from the molded product to prepare a test specimen for the measurement of degree of swelling. Then, the prepared test specimen for the measurement of degree of swelling was immersed into 30 mL of tetrahydrofuran at 25°C for 24 hours. By using the weight change of test specimen before and after the immersing and the following formula, the degree of swelling of test specimen was determined.
[Formula 1]

Degree of swelling (-) = (weight of test specimen after the swelling test (g) - weight of test specimen before the swelling test (g)) / (weight of test specimen before the swelling test (g))

(3) Total light transmittance:

By using a haze meter (NDH-2000 type, manufactured by NIPPON DENSHOKU INDUSTRUIES CO., LTD.), the total light transmittance of test specimen was measured at three portions and the average value thereof was calculated.
[Table 3]

| (100% modulus (unit: MPa)) | | | |
|---|---|---|---|
| Time (hour) | Example 1 | Example 2 | Example 3 |
| 0 | 3.66 | 3.46 | 3.58 |
| 500 | 3.85 | 3.60 | 3.51 |
| 700 | 3.85 | 3.09 | 2.99 |
| 900 | 3.63 | 3.00 | 2.21 |

[Table 4]

| (Degree of swelling (no unit)) | | | |
|---|---|---|---|
| Time (hour) | Example 1 | Example 2 | Example 3 |
| 0 | 4.10 | 4.08 | 4.00 |
| 500 | 3.88 | 4.95 | 6.02 |
| 700 | 3.86 | 6.18 | 6.85 |

(continued)

| (Degree of swelling (no unit)) | | | |
|---|---|---|---|
| Time (hour) | Example 1 | Example 2 | Example 3 |
| 900 | 4.04 | 6.29 | * |
| (*: The test specimen was dissolved into tetrahydrofuran) | | | |

[Table 5]

| (Total light transmittance (unit: %)) | | | |
|---|---|---|---|
| Time (hour) | Example 1 | Example 2 | Example 3 |
| 0 | 91.83 | 91.52 | 91.59 |
| 500 | 89.81 | 89.42 | 87.40 |
| 700 | 89.51 | 88.99 | 84.82 |
| 900 | 89.62 | 89.70 | 84.53 |

INDUSTRIAL APPLICABILITY

The molded product of cross-linkable elastomer composition according to the present invention using the ethylene-vinyl acetate copolymer as the polyolefin substituted is useful for applications such as: packaging materials for various materials such as foods, pharmaceuticals, industrial chemicals and agricultural chemicals, various adhesive films sealing films for solar cells, as well as useful in fields of hemodialysis, plasma component separation, desalting of protein solutions, fractionation, condensation, condensation of fruit juice and wastewater treatment.

## Claims

1. A cross-linking agent for a cross-linkable elastomer comprising a triazine derivative represented by the general formula (I) or prepolymer thereof.

[Chemical Formula 1]

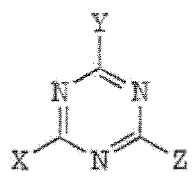

(I)

(In the formula (I), at least two of X, Y and Z are each independently a diallylamino group, a mono-allyl amino group or allyl-methylamino group, and the rest is a hydrogen atom or a hydrocarbon group which may be substituted.)

2. A cross-linking agent according to claim 1,
wherein the cross-linkable elastomer is a substituted polyolefin.

3. A cross-linking agent according to claim 2,
wherein the polyolefin is substituted ethylene-vinyl acetate copolymer.

4. A cross-linkable elastomer composition comprising a cross-linkable elastomer and the triazine derivative represented by the general formula (I) or prepolymer thereof as defined in claim 1, the blending amount of triazine derivative or prepolymer thereof being 0.05 to 15 parts by weight based on 100 parts by weight of the cross-linkable elastomer.

**5.** A cross-linkable elastomer composition according to claim 4, wherein the cross-linkable elastomer is a substituted polyolefin.

**6.** A cross-linkable elastomer composition according to claim 5, wherein the substituted polyolefin is an ethylene-vinyl acetate copolymer.

**7.** A process for producing an elastomer molded product by curing a cross-linkable elastomer, comprising using the triazine derivative represented by the general formula (I) or prepolymer thereof as defined in claim 1 as a cross-linking agent.

**8.** A process according to claim 7, wherein the cross-linkable elastomer is a substituted polyolefin.

**9.** A process according to claim 8, wherein the substitution polyolefin is an ethylene-vinyl acetate copolymer.

**10.** An elastomer molded product cured by the action of cross-linking agent, produced by using the triazine derivative represented by the general formula (I) or prepolymer thereof as defined in claim 1 as a cross-linking agent.

**11.** An elastomer molded product according to claim 10, wherein the elastomer is a substituted polyolefin.

**12.** An elastomer molded product according to claim 11, wherein the substituted polyolefin is an ethylene-vinyl acetate copolymer.

**INTERNATIONAL SEARCH REPORT**

International application No.
PCT/JP2011/052247

A. CLASSIFICATION OF SUBJECT MATTER
*C08L21/00*(2006.01)i, *C08K5/3492*(2006.01)i, *C08L23/08*(2006.01)i

According to International Patent Classification (IPC) or to both national classification and IPC

B. FIELDS SEARCHED

Minimum documentation searched (classification system followed by classification symbols)
C08K3/00-13/08, C08L1/00-101/14

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2011 |
| Kokai Jitsuyo Shinan Koho | 1971-2011 | Toroku Jitsuyo Shinan Koho | 1994-2011 |

Electronic data base consulted during the international search (name of data base and, where practicable, search terms used)
CA/REGISTRY(STN)

C. DOCUMENTS CONSIDERED TO BE RELEVANT

| Category* | Citation of document, with indication, where appropriate, of the relevant passages | Relevant to claim No. |
|---|---|---|
| X<br><br>A | JP 11-21360 A (Ausimont S.p.A.),<br>26 January 1999 (26.01.1999),<br>claims 1, 4<br>& US 6107363 A1 & EP 885928 A | 1-5,7-8,<br>10-11<br>6,9,12 |
| X<br><br>A | JP 2004-514776 A (DUPONT DOW ELASTOMERS L.L.C.),<br>20 May 2004 (20.05.2004),<br>claims 1, 5; paragraph [0055]<br>& EP 1337583 A | 1-5,7-8,<br>10-11<br>6,9,12 |
| A | JP 2009-209370 A (Lanxess Deutschland GmbH),<br>17 September 2009 (17.09.2009),<br>entire text<br>& US 2009/227725 A1 & EP 2098570 A1 | 1-12 |

☐ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 21 February, 2011 (21.02.11) | 01 March, 2011 (01.03.11) |

| Name and mailing address of the ISA/ | Authorized officer |
|---|---|
| Japanese Patent Office | |
| Facsimile No. | Telephone No. |

Form PCT/ISA/210 (second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US P3227065 A